# EUROPÄISCHE PATENTANMELDUNG

(11) **EP 3 736 617 A1**
(43) Veröffentlichungstag der Anmeldung: **11.11.2020**
(21) Anmeldenummer: 19173687.5
(22) Anmeldetag: 10.05.2019
(51) Int. Cl.: G02C 7/02, G02C 7/04

(54) **VERFAHREN ZUM HERSTELLEN EINES OPTISCHEN KORREKTIONSMITTELS**

(71) Anmelder: Carl Zeiss Vision International GmbH, 73430 Aalen (DE)
(72) Erfinder: OHLENDORF, Arne, 72072 Tübingen (DE); JESTER, Philipp, 89522 Heidenheim (DE); WAHL, Siegfried, 73072 Donzdorf (DE); KRATZER, Timo, 73434 Aalen (DE)
(74) Vertreter: Walcher, Armin

(57) **Zusammenfassung**

Die Erfindung betrifft ein Verfahren zum Herstellen eines optischen Korrektionsmittels, insbesondere eines Brillenglases (2) und/oder einer Kontaktlinse. Das optische Korrektionsmittel umfasst eine zentrale optische Korrektionszone (4) und eine diese umgebende periphere Funktionszone (5). Die Größe der zentralen optischen Korrektionszone (4) wird spezifisch für ein Auge einer Person angepasst. Die zentrale optische Korrektionszone (4) wird mit einem negativen ersten Brechwert versehen. Die periphere Funktionszone (5) wird mit einem zweiten Brechwert oder mit einer positionsabhängigen Verteilung des zweiten Brechwerts versehen. Der zweite Brechwert ist relativ zum ersten Brechwert positiver und wird spezifisch für das Auge der Person angepasst. Der Erfindung betrifft weiterhin ein entsprechend hergestelltes optisches Korrektionsmittel, insbesondere ein Brillenglas (2) und/oder eine Kontaktlinse, sowie eine Vorrichtung zum Herstellen des optischen Korrektionsmittels, insbesondere Brillenglases (2) und/oder Kontaktlinse.

## Beschreibung

Die Erfindung betrifft ein Verfahren zum Herstellen eines optischen Korrektionsmittels. Weiterhin betrifft die Erfindung ein entsprechend hergestelltes optisches Korrektionsmittel sowie eine Vorrichtung zum Herstellen des optischen Korrektionsmittels.

In den vergangenen Jahrzehnten hat die Anzahl der kurzsichtigen Personen, insbesondere unter den Kindern und jungen Erwachsenen, in vielen Ländern erheblich zugenommen. Es besteht daher ein Bedarf an optischen Korrektionsmitteln, die eine positive Auswirkung auf die weitere Entwicklung der Kurzsichtigkeit haben.

Der vorliegenden Erfindung liegt die Aufgabe zugrunde, die Nachteile aus dem Stand der Technik zu beseitigen. Insbesondere soll ein Verfahren zum Herstellen eines optischen Korrektionsmittels bereitgestellt werden, durch das ein Entstehen einer Kurzsichtigkeit vermieden, das Fortschreiten einer Kurzsichtigkeit aufgehalten und/oder das Ausmaß einer bestehenden Kurzsichtigkeit nachhaltig verringert werden kann. Weiterhin sind ein entsprechend hergestelltes optisches Korrektionsmittel sowie eine Vorrichtung zum Herstellen eines solchen optischen Korrektionsmittels anzugeben.

Erfindungsgemäß wird diese Aufgabe in Bezug auf das Herstellungsverfahren mit dem Gegenstand des Anspruchs 1, in Bezug auf das optische Korrektionsmittel mit dem Gegenstand des Anspruchs 12 und in Bezug auf die Herstellungsvorrichtung mit dem Gegenstand des Anspruchs 13 gelöst. Vorteilhafte Ausgestaltungen der Erfindung sind in den abhängigen Ansprüchen angegeben.

Das erfindungsgemäße Verfahren betrifft das Herstellen eines optischen Korrektionsmittels, insbesondere eines Brillenglases und/oder einer Kontaktlinse. Das erfindungsgemäße Verfahren betrifft hierbei besonders bevorzugt das Herstellen eines Brillenglases als optisches Korrektionsmittel. Das optische Korrektionsmittel umfasst eine zentrale optische Korrektionszone und eine diese umgebende periphere Funktionszone. Die periphere Funktionszone grenzt an die optische Korrektionszone an. Bei einem Brillenglas umfasst die zentrale optische Korrektionszone wenigstens den Fern-Durchblickpunkt, welcher gemäß DIN EN ISO 13666:2013-10, Absatz 5.16, die angenommene Lage des Durchblickpunktes auf einem Brillenglas für das Sehen in die Ferne unter bestimmten Bedingungen ist. Angrenzend an die optische Korrektionszone nimmt die die zentrale optische Korrektionszone umgebende periphere Funktionszone das restliche Brillenglas ein.
Die Größe der zentralen optischen Korrektionszone wird spezifisch für ein Auge einer Person angepasst. Die zentrale optische Korrektionszone wird mit einem negativen ersten Brechwert versehen. Die periphere Funktionszone wird mit einem zweiten Brechwert oder mit einer positionsabhängigen Verteilung des zweiten Brechwerts versehen. Der zweite Brechwert ist relativ zum ersten Brechwert positiver und wird spezifisch für das Auge der Person angepasst.

Wird in dieser Anmeldung von einem zweiten Brechwert gesprochen, ist darunter eine Verteilung des zweiten Brechwerts zu verstehen. Diese Verteilung des zweiten Brechwerts in der peripheren Funktionszone kann beispielsweise positionsabhängig konstant, positionsabhängig radialsymmetrisch oder positionsabhängig verschieden sein. Vorzugsweise ist die Verteilung des zweiten Brechwerts in der peripheren Funktionszone positionsabhängig verschieden. Weiter vorzugsweise ist die Verteilung des zweiten Brechwerts in der peripheren Funktionszone positionsabhängig verschieden und weder positionsabhängig konstant noch positionsabhängig radialsymmetrisch.

Das optische Korrektionsmittel ist vorzugsweise ein Brillenglas und/oder eine Kontaktlinse. Das optische Korrektionsmittel kann darüber hinaus eine Intraokularlinse sein. Das optische Korrektionsmittel ist besonders bevorzugt ein Brillenglas.

Im Sinne der vorliegenden Anmeldung wird unter "der zweite Brechwert ist relativ zum ersten Brechwert positiver" verstanden, dass die Differenz aus dem zweiten Brechwert und dem ersten Brechwert, das heißt "zweiter Brechwert minus erster Brechwert", positiv ist. Der zweite Brechwert kann also selbst absolut gesehen negativ sein, ist in diesem Fall aber betragsmäßig kleiner als der erste Brechwert. Beispielsweise kann der erste Brechwert gleich -2 dpt sein und der zweite Brechwert gleich -1 dpt sein. Der zweite Brechwert kann weiterhin gleich Null sein. Vorzugsweise ist der zweite Brechwert absolut gesehen positiv, hat also ein positives Vorzeichen. Für den Fall, dass der zweite Brechwert über die periphere Funktionszone hinweg verschiedene Werte annimmt, ist vorzugsweise jeder dieser Werte relativ zum ersten Brechwert positiver.

Im Sinne der vorliegenden Anmeldung wird unter der zentralen optischen Korrektionszone ein im Wesentlichen zentral im optischen Korrektionsmittel, insbesondere zentral im Brillenglas, gelegener Bereich zur Korrektur einer Fehlsichtigkeit, insbesondere Kurzsichtigkeit, des Auges der Person verstanden. Unter einem zentral im Brillenglas liegenden Bereich wird ein Bereich, welcher wenigstens den Fern-Durchblickpunkt des Brillenglases umfasst verstanden. Unter einem zentral im Brillenglas liegenden Bereich wird weiterhin ein Bereich verstanden, welcher wenigstens einen Bereich mit einem Radius von bevorzugt wenigstens 0,3 mm um den Fern-Durchblickpunkt umfasst.

Die zentrale optische Korrektionszone weist spezifisch für das Auge der Person einen negativen ersten Brechwert auf, so dass vorzugsweise eine zentrale sphärische Kurzsichtigkeit und/oder eine astigmatische Fehlsichtigkeit des Auges der Person ausgeglichen wird. Vorzugsweise wird der erste Brechwert in der zentralen optischen Korrektionszone spezifisch für das Auge der Person angepasst.

Die zentrale optische Korrektionszone kann die Form einer Kreisscheibe annehmen. Die Größe der zentralen optischen Korrektionszone kann alternativ dazu in horizontaler (x) bzw. in vertikaler (y) Richtung unterschiedlich sein. Die zentrale optische Korrektionszone kann also die Form einer elliptischen Scheibe annehmen. Weiterhin kann eine Erstreckung bzw. Ausdehnung der zentralen optischen Korrektionszone für verschiedene Richtungen unterschiedlich sein. Die zentrale optische Korrektionszone kann also weiterhin eine beliebige geschlossene flächige Form annehmen. Die horizontale Erstreckung der zentralen optischen Korrektionszone beträgt vorzugsweise weniger als ±15°, das heißt die zentrale optische Korrektionszone erstreckt sich maximal zwischen -15° und 15°, wobei der Fern-Durchblickpunkt durch die Fovea bestimmt ist. Für ein Brillenglas als optisches Korrektionsmittel mit einem typischen Hornhautscheitelabstand von 12 mm ist also vorzugsweise eine horizontale Erstreckung der zentralen optischen Korrektionszone von weniger als 6,4 mm, das heißt weniger als ±3,2 mm jeweils ausgehend von einem Fern-Durchblickpunkt der zentralen optischen Korrektionszone, vorzusehen. Besonders bevorzugt beträgt die horizontale Erstreckung der zentralen optischen Korrektionszone ±10° oder weniger als ±10°. Für das Brillenglas mit 12 mm Hornhautscheitelabstand ist besonders bevorzugt entsprechend eine horizontale Erstreckung der zentralen optischen Korrektionszone von 4,2 mm oder von weniger als 4,2 mm, das heißt ±2,1 mm oder weniger als ±2,1 mm jeweils ausgehend von einem Fern-Durchblickpunkt der zentralen optischen Korrektionszone, vorzusehen. Die vertikale Erstreckung der zentralen optischen Korrektionszone beträgt vorzugsweise weniger als ±15°, besonders bevorzugt ±10° oder weniger als ±10°, jeweils ausgehend von einem Fern-Durchblickpunkt. Für das Brillenglas mit 12 mm Hornhautscheitelabstand sind entsprechend vorzugsweise weniger als 6,4 mm, das heißt weniger als ±3,2 mm jeweils ausgehend vom Fern-Durchblickpunkt, besonders bevorzugt 4,2 mm oder weniger als 4,2 mm, das heißt ±2,1 mm oder weniger als ±2,1 mm jeweils ausgehend vom Fern-Durchblickpunkt, als vertikale Erstreckung der zentralen optischen Korrektionszone vorzusehen. Die in Millimeter angegebene im optischen Korrektionsmittel vorzusehende jeweilige Erstreckung hängt dabei vom Abstand des optischen Korrektionsmittels vom Auge ab. Dabei ergeben sich für Kontaktlinsen geringere Werte für die vorzusehende Erstreckung der zentralen optischen Korrektionszone.

Vorzugsweise ist die vertikale Erstreckung geringer als die horizontale Erstreckung.

Die zentrale optische Korrektionszone und die periphere Funktionszone sind disjunkt, das heißt sie überlappen sich nicht. Die periphere Funktionszone kann die zentrale optische Korrektionszone unmittelbar umgeben. Um Bildsprünge und unstete Brillenglasoberflächen oder unstete Linsenoberflächen zu vermeiden, wird vorzugsweise eine Übergangszone zwischen der zentralen optischen Korrektionszone und der peripheren Funktionszone vorgesehen. Mit Hilfe der Übergangszone wird vorzugsweise ein stetiger und glatter Übergang zwischen der zentralen optischen Korrektionszone und der peripheren Funktionszone bereitgestellt. Die Eigenschaften der zentralen optischen Korrektionszone und der peripheren Funktionszone werden stetig und glatt ineinander übergeführt. Dadurch werden störende Kanten im Seheindruck der Person vermieden.

Die periphere Funktionszone kann die zentrale optische Korrektionszone nur teilweise umgeben, beispielsweise über einen Umfangswinkel von 270° oder 300° hinweg. Vorzugsweise umgibt die periphere Funktionszone die zentrale optische Korrektionszone vollständig. Weiter vorzugsweise umgibt die periphere Funktionszone die zentrale optische Korrektionszone im Wesentlichen elliptisch oder im Wesentlichen zirkulär, bevorzugt elliptisch oder zirkulär. Vorzugsweise werden die zentrale optische Korrektionszone und die periphere Funktionszone konzentrisch oder im Wesentlichen konzentrisch angeordnet. Damit ist gemeint, dass unabhängig von der genauen Beschaffenheit der jeweiligen äußeren Form ein Flächenschwerpunkt der zentralen optischen Korrektionszone und ein Flächenschwerpunkt der peripheren Funktionszone zusammentreffen oder im Wesentlichen zusammentreffen. Insbesondere verläuft vorzugsweise ein äußerer Rand der zentralen optischen Korrektionszone nicht tangential zu einem äußeren Rand der peripheren Funktionszone.

Der zweite Brechwert kann spezifisch für das Auge der Person angepasst werden, so dass eine am Auge der Person vorhandene periphere relative Weitsichtigkeit bei einer Anwendung des optischen Korrektionsmittels (insbesondere des Brillenglases und/oder der Kontaktlinse) auf das Auge der Person reduziert oder korrigiert wird. Vorzugsweise wird der zweite Brechwert spezifisch für das Auge der Person angepasst, so dass bei einer Anwendung des optischen Korrektionsmittels (insbesondere des Brillenglases und/oder der Kontaktlinse) auf das Auge der Person für die periphere Refraktion eine relative induzierte Kurzsichtigkeit resultiert. Insbesondere kann dabei absolut gesehen eine kurzsichtige oder myope Defokussierung induziert werden, vorzugsweise zwischen 0 und +2 dpt, beispielsweise +1 dpt. Vorzugsweise kann die Person also durch die periphere Funktionszone hindurch nur unscharf sehen. Selbst bei einem Durchblicken der peripheren Funktionszone mit der Fovea (und/oder dem die Fovea umgebenden zentralen Bereich der Netzhaut) resultiert ein unscharfer Seheindruck. Insbesondere ist die periphere Funktionszone nicht dazu geeignet, durch sie hindurch zu lesen. Erfindungsgemäß wird der zweite Brechwert so angepasst, dass selbst ein foveales Durchblicken der peripheren Funktionszone kein Lesen zulässt. Foveales Durchblicken beschreibt hierbei den Vorgang, bei dem der Brillenträger nicht zentral, sondern durch periphere Bereiche des Brillenglases blickt. Insbesondere handelt es sich beim erfindungsgemäßen optischen Korrektionsmittel (insbesondere Brillenglas und/oder Kontaktlinse) um kein Gleitsicht-Brillenglas, gemäß DIN EN ISO 13666:2013-10, Absatz 8.3.5, welches mindestens eine Gleitsichtfläche umfasst und eine zunehmende (positive) Wirkung aufweist, wenn der Brillenträger nach unten blickt, somit also eine Fernzone zur verbesserten Sicht in die Ferne und eine Nahzone zur verbesserten Sicht in der Nähe, insbesondere zum Lesen, bereitstellt und damit einer fehlsichtigen Person ohne einen Brillenwechsel sowohl eine gute Fernsicht als auch eine gute Nahsicht ermöglicht.

Es hat sich gezeigt, dass sich durch das Reduzieren einer vorhandenen relativen peripheren Weitsichtigkeit bzw. insbesondere durch das Induzieren einer relativen peripheren Kurzsichtigkeit mittels eines optischen Korrektionsmittels (insbesondere eines Brillenglases und/oder einer Kontaktlinse) die Entstehung bzw. die Progression einer zentralen Kurzsichtigkeit gehemmt werden können. Außerdem hat sich gezeigt, dass dadurch eine bestehende zentrale Kurzsichtigkeit reduziert werden kann. Durch das spezifische Anpassen des zweiten Brechwerts an das Auge der Person kann diese hemmende bzw. reduzierende Wirkung auf eine zentrale oder foveale Kurzsichtigkeit weiter verstärkt werden. Unter einer zentralen oder fovealen Kurzsichtigkeit ist eine vorhandene myope Fehlsichtigkeit des Auges zu verstehen.

Im Sinne der vorliegenden Anmeldung zielt die periphere Funktionszone nicht primär auf eine Korrektion einer Fehlsichtigkeit ab. Die periphere Funktionszone kann zwar (als Nebeneffekt) einen korrigierten Seheindruck bereitstellen. Vorzugsweise stellt die periphere Funktionszone jedoch keinen korrigierten Seheindruck bereit. Stattdessen übt die periphere Funktionszone einen Einfluss auf die weitere Entwicklung des Auges aus. Durch Vorsehen der peripheren Funktionszone wird das Entstehen oder die Progression einer Kurzsichtigkeit am Auge der Person verhindert oder gehemmt. Durch Vorsehen der peripheren Funktionszone kann eine bestehende Kurzsichtigkeit am Auge der Person sogar verringert werden. Im Rahmen der vorliegenden Anmeldung sind insbesondere Kinder und junge Erwachsene, vorzugsweise Erwachsene unter 43 Jahren, unter dem Begriff "Person" zu verstehen.

Die Erfindung betrifft vorzugsweise auch ein Verfahren zum individuellen Bestimmen der Größe der zentralen optischen Korrektionszone für ein optisches Korrektionsmittel, insbesondere für ein Brillenglas und/oder eine Kontaktlinse. Die Erfindung betrifft insbesondere ein Verfahren zum individuellen Bestimmen der Größe der zentralen optischen Korrektionszone für ein Brillenglas.

Nach einer bevorzugten Ausführungsform der Erfindung ist vorgesehen, dass als Größe der zentralen optischen Korrektionszone eine spezifisch für das Auge der Person, vorzugsweise mittels eines psychophysischen Verfahrens, bestimmte minimale Größe vorgesehen wird.

Das psychophysische Verfahren kann ein adaptives Stufenverfahren, ein constant-stimuli-Verfahren (das heißt, dass der Reiz eine konstante Größe hat) oder ein supra-threshold-Verfahren (das heißt, dass der Reiz eine Größe hat, die größer als die Wahrnehmungsschwelle ist) sein.

Das psychophysische Verfahren zielt auf die Unterscheidung zwischen dem visuellen Blick- und Gesichtsfeld ab. Mit Hilfe des psychophysischen Verfahrens wird erfasst, inwieweit (d.h. bis zu welcher Sehexzentrizität) eine Sehaufgabe durch Bewegen der Augen und/oder durch Bewegen des Kopfes bewältigt wird. Zur Durchführung des psychophysischen Verfahrens ist eine Anzeigevorrichtung erforderlich. Die Anzeigevorrichtung kann beispielsweise ein Bildschirm oder Monitor sein. Dies kann ein feststehender Monitor sein. Vorzugsweise wird der Monitor einer VR- bzw. AR-Brille verwendet. VR steht dabei für "virtual reality", AR steht für "augmented reality". Dadurch kann das psychophysische Verfahren beispielsweise in einer Virtual Reality bzw. Augmented Reality Umgebung durchgeführt werden. Das auf der Anzeigevorrichtung präsentierte Sehziel kann statistisch oder dynamisch sein. Weiterhin sind für die Durchführung des psychophysischen Verfahrens ein Gerät zur Bestimmung der Augenbewegungen und ein Gerät oder mehrere Geräte zur Bestimmung der Kopfbewegungen erforderlich. Die Augen- und/oder Kopfbewegung kann beispielsweise mit einem Einkamerasystem oder mit einem mehrere Kameras umfassenden System erfasst werden. Die Kopfbewegung kann optisch oder gyroskopisch, z.B. mit einer VR-Brille, erfasst werden. Weiterhin kann das psychophysische Verfahren mit Hilfe eines Geräts zur gleichzeitigen Messung von Augen- und Kopfbewegungen durchgeführt werden. Dabei kann es sich beispielsweise um einen in einer VR- bzw. AR-Brille vorhandenen Eye-Tracker handeln. Weiterhin kann es sich auch um ein externes Gerät zur gleichzeitigen Messung der Augen- und Kopfbewegungen handeln. Dieses Gerät wird vor einem feststehenden Monitor in einer beliebigen Entfernung platziert. Die Entfernung vom Kopf der Person bis zum externen Gerät beträgt vorzugsweise zwischen 30 und 200 cm, besonders bevorzugt zwischen 60 und 100 cm. Die Person kann dabei z.B. eine Brillenglaskorrektur für die jeweilige Entfernung oder auch ein optisches Korrektionsmittel, insbesondere eine Brille oder Kontaktlinsen, zur Korrektur einer eventuell vorliegenden Fehlsichtigkeit tragen, z.B. eine eigene Brille. Zur besseren Bestimmung des Blick- und Gesichtsfeldes, weist die Person vorzugsweise sogenannte Targets (z.B. erhältlich bei Firma OptiNav Sp. z o.o., Polen) an ihrer Brille und zum Beispiel am Kopf auf. Diese Targets können durch Kameras zur Messung der Augen- und/oder Kopfbewegungen einfach erkannt werden. Der verwendete Bildschirm bzw. Monitor weist vorzugsweise eine Mindestgröße bzw. eine Minimalentfernung zum Gesicht der Person auf.

Vorzugsweise löst der Bildschirm bzw. Monitor Augenbewegungen von zumindest ± 15° in der horizontalen bzw. zumindest ± 10° in der vertikalen Richtung auf. Zur Durchführung des psychophysischen Verfahrens werden auf dem Monitor randomisierte Sehzeichen (wie zum Beispiel beschrieben in der derzeitig gültigen DIN EN ISO 8596) dargestellt, die sich in Größe und/oder Position randomisiert unterscheiden. Die Augen- und/oder Kopfbewegungen der Person werden vorzugsweise automatisiert aufgenommen und von einer Steuersoftware automatisiert ausgewertet. Die Steuersoftware nimmt vorzugsweise eine Unterscheidung zwischen Augen- und Kopfbewegungen vor. Um die Unterscheidung zwischen Blick- und Gesichtsfeld genau durchzuführen, werden vorzugsweise zumindest 20 Sehzeichen pro Durchgang präsentiert. Eine weitere vorteilhafte Ausgestaltung der Erfindung besteht darin, die Augen- und Kopfbewegungen aufzunehmen, während die Sehzeichen sich dynamisch von der Mitte des Bildschirms bzw. Monitors nach außen (in x- und y-Richtung) bzw. von außen nach innen bewegen.

Mittels des psychophysischen Verfahrens wird also eine minimale Größe der zentralen optischen Korrektionszone spezifisch für ein Auge einer Person bestimmt. Durch das Vorsehen dieser minimalen Größe der zentralen optischen Korrektionszone kann eine größtmögliche periphere Funktionszone im optischen Korrektionsmittel, insbesondere im Brillenglas und/oder in der Kontaktlinse, vorgesehen werden. Dadurch kann eine Entstehung bzw. Progression einer zentralen Kurzsichtigkeit besonders gut gehemmt werden. Außerdem kann dadurch eine bestehende zentrale Kurzsichtigkeit besonders gut reduziert werden.

Alternativ oder zusätzlich zur vorstehend beschriebenen Bestimmung der Größe der zentralen optischen Korrektionszone kann die zentrale optische Korrektionszone auf der Grundlage einer Messung einer Blickwinkelverteilung spezifisch für das Auge einer Person bestimmt werden.

Der zweite Brechwert kann über die gesamte periphere Funktionszone hinweg konstant sein. In diesem Fall ist die Verteilung des zweiten Brechwerts in der peripheren Funktionszone konstant.

Nach einer weiteren bevorzugten Ausführungsform der Erfindung ist vorgesehen, dass der zweite Brechwert für verschiedene Exzentrizitäten in der peripheren Funktionszone jeweils spezifisch für ein Auge einer Person angepasst ist.

Im Sinne der vorliegenden Anmeldung werden unter "verschiedene Exzentrizitäten" verschiedene Abstände von der Fovea in radialer Richtung verstanden. Der zweite Brechwert kann also für verschiedene Abstände von der Fovea in radialer Richtung verschiedene Werte annehmen. In diesem Fall ist die Verteilung des zweiten Brechwerts in der peripheren Funktionszone radialsymmetrisch.

Nach einer weiteren bevorzugten Ausführungsform der Erfindung ist vorgesehen, dass der zweite Brechwert für verschiedene Positionen in der peripheren Funktionszone jeweils spezifisch für ein Auge einer Person angepasst ist.

Der zweite Brechwert kann also für verschiedene Positionen in der peripheren Funktionszone verschiedene Werte annehmen. In diesem Fall ist die Verteilung des zweiten Brechwerts in der peripheren Funktionszone positionsabhängig.

Nach einer weiteren bevorzugten Ausführungsform der Erfindung ist vorgesehen, dass die Differenz aus dem zweiten Brechwert und dem ersten Brechwert zumindest 0,1 dpt, vorzugsweise zwischen 0,1 dpt und 4 dpt, bevorzugt zwischen 0,5 dpt und 2,0 dpt, besonders bevorzugt zwischen 0,8 dpt und 1,2 dpt beträgt.

Die Erfindung betrifft vorzugsweise auch ein Verfahren zum Bestimmen der individuell tolerierten Unschärfe in der Peripherie eines optischen Korrektionsmittels, insbesondere eines Brillenglases und/oder einer Kontaktlinse.

Nach einer weiteren bevorzugten Ausführungsform der Erfindung ist vorgesehen, dass ein spezifisch für das Auge der Person maximal tolerierbarer zweiter Brechwert mit einem subjektiven und/oder einem objektiven Verfahren bestimmt wird.

Es wird dabei also bestimmt, welche Unschärfe spezifisch für das Auge der Person in der Netzhautperipherie bzw. bei Durchblicken durch den Fern-Durchblickpunkt des optischen Korrektionsmittels in der peripheren Funktionszone eines erfindungsgemäßen optischen Korrektionsmittels, insbesondere eines Brillenglases und/oder einer Kontaktlinse, maximal toleriert wird. Das Durchblicken durch den Fern-Durchblickpunkt kann dabei durch den Einsatz eines Eye-Trackers sichergestellt werden und das Verfahren beispielsweise unter gaze-contingent Bedingungen durchgeführt werden. Gaze-contingent Bedingungen sind im Allgemeinen Technologien, welche es erlauben, auf einem Bildschirm, beispielsweise einem Computerdisplay, blickpositionsabhängig immer den gleichen Inhalt darzustellen. Beim subjektiven Verfahren kann es sich um ein psychophysisches Verfahren, insbesondere um ein adaptives Stufenverfahren handeln. Beim objektiven Verfahren kann es sich um Elektrodiagnostik (EEG), NIR Spektrometrie und/oder Magnetresonanzbildgebung (MRI) handeln. Beim objektiven Verfahren werden objektive Schwellwerte für den zweiten Brechwert spezifisch für das Auge der Person bestimmt.

Vorzugsweise erfolgt das Bestimmen des spezifisch für das Auge der Person maximal tolerierbaren zweiten Brechwerts positionsaufgelöst. Dabei wird vorzugsweise für eine Vielzahl von Positionen im Gesichtsfeld, das heißt für eine Vielzahl von Messpunkten, jeweils ein maximal tolerierbarer zweiter Brechwert bestimmt.

Beim Vorgehen über ein adaptives Stufenverfahren wird der zweite Brechwert vorzugsweise so weit erhöht, bis sich ein unscharfer Seheindruck für die Person einstellt. Solange diese Unschärfe für die Person noch tolerierbar ist, wird der zweite Brechwert vorzugsweise weiter erhöht. Ziel ist es dabei, einen Schwellwert für den zweiten Brechwert zu finden, der eine für die Person maximal tolerierbare Unschärfe in der Netzhautperipherie bewirkt.

Dabei werden auf einem Monitor (z.B. einem externen Bildschirm oder dem Bildschirm beispielsweise einer VR Brille) Sehzeichen nach der derzeit gültigen DIN EN ISO 8596 an unterschiedlichen Positionen und mit unterschiedlichen positiven Brechwerten dargestellt. Für diese Positionen wird jeweils die für die Person maximal tolerierbare Unschärfe durch ein psychophysisches Stufenverfahren ermittelt. Dafür wird an einer Position auf dem Bildschirm, die gekennzeichnet ist durch eine genaue x und y-Position, ein Sehzeichen, beispielsweise ein Landoltring oder ein anderes an den Landoltring angeschlossenes Sehzeichen, dargestellt. Die Sehschwelle für die Größe dieses Sehzeichens, welche für diese definierte Position gewählt wird, ergibt sich aus dem Wissen zur Sehschärfe in der Netzhautperipherie. Dem Fachmann ist bekannt, welche physiologischen und physikalischen Grenzen die Sehschärfe an jeder definierten Position in der Netzhautperipherie hat. Nachfolgend wird das zu verwendende Sehzeichen mit unterschiedlichen Defokussierungsstufen an dieser definierten Position in der Netzhautperipherie dargestellt und die Person hat anzugeben, beispielsweise in welcher Richtung der Landoltring geöffnet ist. Dabei gibt es maximal acht mögliche Antworten. Die Eingabe der Antwortmöglichkeit kann beispielsweise mit einem NumPad einer Tastatur erfolgen. Dieses Verfahren wird so lange fortgeführt, bis zum Beispiel eine Schwelle von 60% der Antworten bei der gleichen Defokussierung falsch sind. In diesem Fall gibt die Person in 3 von 5 Fällen eine falsche Antwort. Es können auch andere Schwellen verwendet werden, vorzugsweise höhere Schwellen, beispielsweise 70% oder 80%. Weiterhin ist auch eine andere Definition der Schwellen möglich. Als Ergebnis resultiert eine Funktion aus Sehschärfe und zweitem Brechwert. Der ermittelte maximale positive Brechwert der Defokussierung entspricht der subjektiv tolerierbaren Unschärfeschwelle an der definierten Netzhautposition.

Das psychophysische Verfahren zur Bestimmung der Unschärfeschwelle, insbesondere das adaptive Stufenverfahren, kann durch eine Steuersoftware durchgeführt werden.

Die unterschiedlichen Defokussierungsstufen des Sehzeichens oder die Größe des Sehzeichens können durch die Steuersoftware bestimmt und entsprechend auf dem Monitor dargestellt werden. Alternativ dazu kann die Person unterschiedliche optische Korrektionsmittel, insbesondere unterschiedliche Brillengläser oder Kontaktlinsen, verwenden. Dabei sind zwei verschiedene Herangehensweisen vorgesehen.

Im ersten Fall bleibt die Größe des auf der Anzeigevorrichtung angezeigten Sehzeichens konstant. Die Person verwendet nach und nach unterschiedliche optische Korrektionsmittel, beispielsweise Brillengläser. Zur Vereinfachung werden insbesondere Einstärken-Brillengläser mit jeweils unterschiedlichen Brechwerten verwendet. Ein Einstärken-Brillenglas ist gemäß DIN EN ISO 13666:2013-10, Abschnitt 8.3.1, ein Brillenglas, bei dem von der Konstruktion her nur eine dioptrische Wirkung vorhanden ist. Da beim hier erläuterten Verfahren zum Bestimmen der individuell tolerierten Unschärfe auf den Brechwert in der Peripherie der Brillengläser abgestellt wird, wird im Folgenden trotz der Verwendung von insbesondere Einstärken-Brillengläsern von zweiten Brechwerten gesprochen. Die Person verwendet beispielsweise nach und nach Einstärken-Brillengläser mit den zweiten Brechwerten 0 dpt, +1 dpt, +2 dpt und +3 dpt. Für jedes optische Korrektionsmittel, insbesondere Brillenglas, hat die Person anzugeben, ob bei Durchblicken durch den Fern-Durchblickpunkt des Brillenglases das im peripheren Sehbereich wahrzunehmende Sehzeichen mit einer tolerierbaren Unschärfe wahrnehmbar ist oder ob die Unschärfe nicht mehr tolerierbar ist. Die Person gibt beispielsweise bis +2 dpt an, die Unschärfe sei tolerierbar, und bei +3 dpt, die Unschärfe sei nicht mehr tolerierbar. In diesem Beispiel ergibt sich die maximal tolerierbare Unschärfe bei einem zweiten Brechwert von +2 dpt. Der Schwellwert für die maximal tolerierbare Unschärfe ist in dem hier vorgestellten ersten Fall die Defokussierung, also direkt der zweite Brechwert des optischen Korrektionsmittels, insbesondere des Brillenglases.

Im zweiten Fall verwendet die Person auch nach und nach unterschiedliche optische Korrektionsmittel, beispielsweise Brillengläser, insbesondere Einstärken-Brillengläser mit jeweils unterschiedlichen Brechwerten, nachfolgend zweite Brechwerte genannt (siehe Erläuterung zum ersten Fall oben). Hier wird jedoch zu jedem einzelnen optischen Korrektionsmittel (insbesondere Brillenglas bzw. Einstärken-Brillenglas) ein Sehschärfetest durchgeführt. Dazu wird das auf der Anzeigevorrichtung angezeigte und für die Person im peripheren Sehbereich wahrzunehmende Sehzeichen nach und nach in seiner Größe verändert, vorzugsweise sukzessive verringert. Dabei wird die gerade noch für das Auge der Person auflösbare Größe des Sehzeichens ermittelt. Dieser Sehschärfetest wird für jedes weitere optische Korrektionsmittel (insbesondere Brillenglas bzw. Einstärken-Brillenglas) wiederholt. Im zweiten Fall ist als Schwellwert eine Mindestsehschärfe vorgegeben. Die maximal tolerierbare Unschärfe liegt hier bei dem zweiten Brechwert des optischen Korrektionsmittels (insbesondere Brillenglases), für das sich im betreffenden Sehschärfetest die kleinste noch oberhalb der Mindestsehschärfe liegende Sehschärfe ergibt.

Während des psychophysischen Verfahrens werden vorzugsweise die Augen- und/oder Kopfbewegungen der Person erfasst. Das psychophysische Verfahren wird vorzugsweise unter gaze-contigent Bedingungen durchgeführt werden. Zur Kontrolle der Augenbewegungen, bzw. um ein Gaze-Contigent-Experiment durchzuführen, kann ein Blickbewegungsmessgerät (Eye-Tracker) verwendet werden. Vorzugsweise wird dazu ein möglichst schneller Eye-Tracker verwendet, z.B. Eye Link, Firma SR Research Ltd., Kanada. Die Sampling-Rate des Eye-Trackers beträgt dabei vorzugsweise zumindest 120 Hz, besonders bevorzugt zumindest 240 Hz. Solche Sampling-Raten ermöglichen einen besonders stabilen Betrieb. Die sphärische Unschärfe der zu verwendenden Sehzeichen kann durch die Steuersoftware generiert werden. Durch die Steuersoftware kann weiterhin die Präsentation des Stimulus (d.h. des entsprechend generierten Sehzeichens) erfolgen.

Die "maximal tolerierbare Unschärfe" kann gemäß Atchison, David A. and Guo, Huanqing and Charman, W. Neil and Fisher, S. W. (2009): Blur limits for defocus, astigmatism and trefoil, Vision Research, 49(14), Seiten 2393-2403 definiert werden. Der Schwellwert für den zweiten Brechwert kann beispielsweise zwischen 0,3 und 2,5 dpt, vorzugsweise zwischen 0,5 und 1,5 dpt, insbesondere zwischen 0,8 und 1,2 dpt liegen.

Vorzugsweise wird ein möglichst hoher zweiter Brechwert, insbesondere der maximal tolerierbare zweite Brechwert in der peripheren Funktionszone des optischen Korrektionsmittels, insbesondere des Brillenglases und/oder der Kontaktlinse, vorgesehen. Dadurch kann eine Entstehung bzw. Progression einer zentralen Kurzsichtigkeit besonders gut gehemmt werden. Außerdem kann dadurch eine bestehende zentrale Kurzsichtigkeit besonders gut reduziert werden. Vorzugsweise wird der zweite Brechwert dabei in Abhängigkeit von der Exzentrizität oder positionsabhängig in der peripheren Funktionszone vorgesehen. Zusätzlich oder alternativ dazu kann der zweite Brechwert in Abhängigkeit von der individuellen peripheren Refraktion bestimmt und im optischen Korrektionsmittel, insbesondere im Brillenglas und/oder in der Kontaktlinse, vorgesehen werden.

Die Erfindung betrifft vorzugsweise auch ein Verfahren zum Bestimmen der individuellen Brechkraftverteilung in der peripheren Funktionszone eines optischen Korrektionsmittels, insbesondere eines Brillenglases und/oder einer Kontaktlinse.

Nach einer weiteren bevorzugten Ausführungsform der Erfindung ist vorgesehen, dass spezifisch für das Auge der Person eine periphere Refraktion gemessen wird.

Unter dem Messen einer peripheren Refraktion wird verstanden, dass die Refraktion des Auges der Person nicht nur in einem zentralen Bereich, sondern insbesondere in einem peripheren Bereich gemessen wird. Bei der Messung der peripheren Refraktion des Auges der Person wird der Brechwert des Auges der Person vorzugsweise positionsabhängig gemessen. Dabei wird vorzugsweise für eine Vielzahl von Positionen im Gesichtsfeld, das heißt für eine Vielzahl von Messpunkten, jeweils ein Brechwert bestimmt. Vorzugsweise werden beim Messen der peripheren Refraktion und beim Bestimmen des maximal tolerierbaren zweiten Brechwerts die gleichen Messpunkte verwendet. Der Brechwert des Auges der Person wird im Folgenden "Brechkraft des Auges der Person" oder kurz "Brechkraft" genannt.

Die periphere Refraktion des Auges der Person wird vorzugsweise durch ein Messgerät gemessen. Mögliche Messgeräte sind dabei ein exzentrischer Photorefraktor mit zumindest in horizontaler und vertikaler Richtung vorhandenen Beleuchtungs-LEDs zur Bestimmung des sphärischen Äquivalents, ein Magnet-Resonanz-Tomograph und/oder eine Funduskamera zum Erstellen einer zweidimensionalen Refraktionskarte. Weiterhin kann die periphere Refraktion des Auges der Person mittels optischer Kohärenztomografie, mittels Autorefraktoren und/oder mittels eines Hartmann-Shack Sensors gemessen werden.

Aus den durch das Messen der peripheren Refraktion gewonnenen Daten wird vorzugsweise eine zumindest zweidimensionale Refraktionskarte für das Auge der Person erstellt.

Vorzugsweise wird der zweite Brechwert in der peripheren Funktionszone des optischen Korrektionsmittels, insbesondere des Brillenglases und/oder der Kontaktlinse, unter Berücksichtigung der spezifisch für das Auge der Person bestimmten peripheren Refraktion vorgesehen. Dadurch kann eine Entstehung bzw. Progression einer zentralen Kurzsichtigkeit besonders gut gehemmt werden. Außerdem kann dadurch eine bestehende zentrale Kurzsichtigkeit besonders gut reduziert werden. Wie oben bereits erläutert kann zusätzlich oder alternativ dazu der zweite Brechwert in Abhängigkeit von einem maximal tolerierbaren zweiten Brechwert im optischen Korrektionsmittel, insbesondere im Brillenglas und/oder in der Kontaktlinse, vorgesehen werden.

Nach einer weiteren bevorzugten Ausführungsform der Erfindung ist vorgesehen, dass die periphere Refraktion des Auges der Person in horizontaler Richtung in einem Bereich zumindest von -10° bis +10°, vorzugsweise in einem Bereich zumindest von -20° bis +20°, besonders bevorzugt in einem Bereich von -60° bis +60°, jeweils bezogen auf die Fovea gemessen wird.

Die angegebenen Winkel beziehen sich auf das Gesichtsfeld des Auges der Person. Der Nullpunkt ist dabei durch die Fovea definiert. Zur Messung der peripheren Refraktion des Auges der Person werden vorzugsweise mehrere jeweils zueinander in vertikaler Richtung versetzte horizontal verlaufende Linienmessungen durchgeführt. Der Versatz in vertikaler Richtung zwischen zwei benachbarten horizontal verlaufenden Linienmessungen beträgt vorzugsweise jeweils ±10°, besonders bevorzugt jeweils ±5°, jeweils ausgehend von der Fovea als Nullpunkt. Vorzugsweise beträgt der maximale Versatz in vertikaler Richtung zumindest ±10°, besonders bevorzugt zumindest ±20°, insbesondere ±60°, jeweils ausgehend von der Fovea als Nullpunkt.

Nach einer weiteren bevorzugten Ausführungsform der Erfindung ist vorgesehen, dass die periphere Refraktion des Auges der Person mit einer Auflösung von ±5° oder besser, vorzugsweise ±2°, besonders bevorzugt ±1°, in horizontaler Richtung gemessen wird.

Nach einer weiteren bevorzugten Ausführungsform der Erfindung ist vorgesehen, dass der zweite Brechwert in der peripheren Funktionszone derart vorgesehen wird, dass aus dem zweiten Brechwert und der peripheren Refraktion des Auges der Person ein vorgegebener Gesamtbrechwert resultiert.

Nach einer weiteren Ausführungsform der Erfindung ist vorgesehen, dass der zweite Brechwert in der peripheren Funktionszone derart vorgesehen wird, dass aus dem zweiten Brechwert und der peripheren Refraktion des Auges der Person ein Gesamtbrechwert resultiert.

Wie oben erläutert wird die periphere Refraktion des Auges der Person, das heißt die Brechkraft des Auges der Person in einem peripheren Bereich, vorzugsweise positionsabhängig bestimmt. Insbesondere nimmt die Brechkraft des Auges der Person positionsabhängig unterschiedliche Werte an. Folglich sind auch positionsabhängig unterschiedliche zweite Brechwerte in der peripheren Funktionszone vorzusehen.

Der vorgegebene Gesamtbrechwert ist vorzugsweise auch bei jeweils positionsabhängigem zweiten Brechwert und positionsabhängiger Brechkraft des Auges der Person konstant. Der vorgegebene Gesamtbrechwert kann negativ sein. Vorzugsweise beträgt der vorgegebene Gesamtbrechwert 0 dpt, besonders bevorzugt wird ein positiver Gesamtbrechwert, beispielsweise 0,5 dpt oder 1 dpt. Dadurch kann eine Entstehung bzw. Progression einer zentralen Kurzsichtigkeit besonders gut gehemmt werden. Außerdem kann dadurch eine bestehende zentrale Kurzsichtigkeit besonders gut reduziert werden.

Vorzugsweise wird der zweite Brechwert bzw. die Verteilung des zweiten Brechwerts durch eine Steuersoftware bestimmt. Diese Bestimmung erfolgt vorzugsweise auf der Grundlage des vorgegebenen Gesamtbrechwerts und der peripheren Refraktion des Auges der Person. Die periphere Refraktion des Auges der Person kann beispielsweise in Form der zumindest zweidimensionalen Refraktionskarte für das Auge der Person durch die Steuersoftware verarbeitet werden.

Weiterhin kann für die Bestimmung des zweiten Brechwerts bzw. der Verteilung des zweiten Brechwerts die Verteilung dioptrischer Abstände im Gesichtsfeld der Person berücksichtigt werden.

Nach einer weiteren bevorzugten Ausführungsform der Erfindung ist vorgesehen, dass der aus der peripheren Refraktion des Auges der Person und dem vorgegebenen Gesamtbrechwert bestimmte zweite Brechwert mit dem spezifisch für das Auge der Person maximal tolerierbaren zweiten Brechwert verglichen wird, und bei einem Überschreiten des maximal tolerierbaren zweiten Brechwerts auf den maximal tolerierbaren zweiten Brechwert gesenkt wird.

Vorzugsweise erfolgt das Vergleichen positionsabhängig, insbesondere jeweils separat für verschiedene Messpunkte. Entsprechend erfolgt das Absenken bei einem Überschreiten des maximal tolerierbaren zweiten Brechwerts vorzugsweise positionsabhängig, insbesondere jeweils separat für verschiedene Messpunkte. Vorzugsweise wird also der aus der peripheren Refraktion des Auges der Person und dem vorgegebenen Gesamtbrechwert bestimmte zweite Brechwert oder, sofern dieser den maximal tolerierbaren zweiten Brechwert überschreitet, der maximal tolerierbare zweite Brechwert in der peripheren Funktionszone des optischen Korrektionsmittels, insbesondere des Brillenglases und/oder der Kontaktlinse, vorgesehen. Vorzugsweise erfolgt dieses Vorsehen positionsabhängig. Dadurch kann eine Entstehung bzw. Progression einer zentralen Kurzsichtigkeit besonders gut gehemmt werden. Außerdem kann dadurch eine bestehende zentrale Kurzsichtigkeit besonders gut reduziert werden.

Vorzugsweise wird der zweite Brechwert bzw. die Verteilung der zweiten Brechwerte in der peripheren Funktionszone des optischen Korrektionsmittels, insbesondere des Brillenglases und/oder der Kontaktlinse, automatisch durch eine Software bestimmt.

Die Erfindung betrifft vorzugsweise auch ein Verfahren zum Bestimmen von Oberflächenbearbeitungsdaten für die zentrale optische Korrektionszone und die periphere Funktionszone des optischen Korrektionsmittels, insbesondere des Brillenglases und/oder der Kontaktlinse.

Die Erfindung betrifft vorzugsweise auch ein Verfahren zum Zuführen der Oberflächenbearbeitungsdaten an einen Automaten zur mechanischen Bearbeitung von optischen Oberflächen zum mechanischen Bearbeiten der optischen Oberflächen von Rohlingen gemäß den Oberflächenbearbeitungsdaten.

Das mechanische Bearbeiten der optischen Oberflächen umfasst vorzugsweise Schleifen und/oder Polieren. Die Oberflächenbearbeitungsdaten umfassen vorzugsweise Schleifdaten und/oder Polierdaten. Der Automat zur mechanischen Bearbeitung von optischen Oberflächen umfasst vorzugsweise einen Schleif- und/oder Polierautomaten.

Erfindungsgemäß ist weiterhin ein optisches Korrektionsmittel vorgesehen. Das optische Korrektionsmittel kann insbesondere ein Brillenglas und/oder eine Kontaktlinse sein. Das optische Korrektionsmittel ist hierbei besonders bevorzugt ein Brillenglas. Das optische Korrektionsmittel umfasst eine zentrale optische Korrektionszone und eine diese umgebende periphere Funktionszone. Die periphere Funktionszone grenzt an die optische Korrektionszone an. Bei einem Brillenglas umfasst die zentrale optische Korrektionszone wenigstens den Fern-Durchblickpunkt, welcher gemäß DIN EN ISO 13666:2013-10, Absatz 5.16, die angenommene Lage des Durchblickpunktes auf einem Brillenglas für das Sehen in die Ferne unter bestimmten Bedingungen ist. Angrenzend an die optische Korrektionszone nimmt die die zentrale optische Korrektionszone umgebende periphere Funktionszone das restliche Brillenglas ein.
Die Größe der zentralen optischen Korrektionszone ist spezifisch für ein Auge einer Person angepasst. Die zentrale optische Korrektionszone ist mit einem negativen ersten Brechwert versehen. Die periphere Funktionszone ist mit einem zweiten Brechwert oder mit einer positionsabhängigen Verteilung des zweiten Brechwerts versehen. Der zweite Brechwert ist relativ zum ersten Brechwert positiver und spezifisch für das Auge der Person angepasst.

Das optische Korrektionsmittel ist vorzugsweise ein Brillenglas und/oder eine Kontaktlinse. Das optische Korrektionsmittel kann darüber hinaus eine Intraokularlinse sein. Das optische Korrektionsmittel ist besonders bevorzugt ein Brillenglas.

Wird in dieser Anmeldung von einem zweiten Brechwert gesprochen, ist darunter eine Verteilung des zweiten Brechwerts zu verstehen. Diese Verteilung des zweiten Brechwerts in der peripheren Funktionszone kann beispielsweise positionsabhängig konstant, positionsabhängig radialsymmetrisch oder positionsabhängig verschieden sein. Vorzugsweise ist die Verteilung des zweiten Brechwerts in der peripheren Funktionszone positionsabhängig verschieden. Weiter vorzugsweise ist die Verteilung des zweiten Brechwerts in der peripheren Funktionszone positionsabhängig verschieden und weder positionsabhängig konstant noch positionsabhängig radialsymmetrisch.

Im Sinne der vorliegenden Anmeldung wird unter "der zweite Brechwert ist relativ zum ersten Brechwert positiver" verstanden, dass die Differenz aus dem zweiten Brechwert und dem ersten Brechwert, das heißt "zweiter Brechwert minus erster Brechwert", positiv ist. Der zweite Brechwert kann also selbst absolut gesehen negativ sein, ist in diesem Fall aber betragsmäßig kleiner als der erste Brechwert. Beispielsweise kann der erste Brechwert gleich -2 dpt sein und der zweite Brechwert gleich -1 dpt sein. Der zweite Brechwert kann weiterhin gleich Null sein. Vorzugsweise ist der zweite Brechwert absolut gesehen positiv, hat also ein positives Vorzeichen. Für den Fall, dass der zweite Brechwert über die periphere Funktionszone hinweg verschiedene Werte annimmt, ist vorzugsweise jeder dieser Werte relativ zum ersten Brechwert positiver.

Im Sinne der vorliegenden Anmeldung wird unter der zentralen optischen Korrektionszone ein im Wesentlichen zentral im optischen Korrektionsmittel, insbesondere zentral im Brillenglas, gelegener Bereich zur Korrektur einer Fehlsichtigkeit, insbesondere Kurzsichtigkeit, des Auges der Person verstanden. Unter einem zentral im Brillenglas liegenden Bereich wird ein Bereich, welcher wenigstens den Fern-Durchblickpunkt des Brillenglases umfasst verstanden. Unter einem zentral im Brillenglas liegenden Bereich wird weiterhin ein Bereich verstanden, welcher wenigstens einen Bereich mit einem Radius von bevorzugt wenigstens 0,3 mm um den Fern-Durchblickpunkt umfasst.

Die zentrale optische Korrektionszone weist spezifisch für das Auge der Person einen negativen ersten Brechwert auf, so dass vorzugsweise eine zentrale sphärische Kurzsichtigkeit und/oder eine astigmatische Fehlsichtigkeit des Auges der Person ausgleichbar ist. Vorzugsweise ist der erste Brechwert in der zentralen optischen Korrektionszone spezifisch für das Auge der Person angepasst.

Die zentrale optische Korrektionszone kann die Form einer Kreisscheibe annehmen. Die Größe der zentralen optischen Korrektionszone kann alternativ dazu in horizontaler (x) bzw. in vertikaler (y) Richtung unterschiedlich sein. Die zentrale optische Korrektionszone kann also die Form einer elliptischen Scheibe annehmen. Weiterhin kann eine Erstreckung bzw. Ausdehnung der zentralen optischen Korrektionszone für verschiedene Richtungen unterschiedlich sein. Die zentrale optische Korrektionszone kann also weiterhin eine beliebige geschlossene flächige Form annehmen. Die horizontale Erstreckung der zentralen optischen Korrektionszone beträgt vorzugsweise weniger als ±15°, das heißt die zentrale optische Korrektionszone erstreckt sich maximal zwischen -15° und 15°, wobei der Fern-Durchblickpunkt durch die Fovea bestimmt ist. Für ein Brillenglas als optisches Korrektionsmittel mit einem typischen Hornhautscheitelabstand von 12 mm ist also vorzugsweise eine horizontale Erstreckung der zentralen optischen Korrektionszone von weniger als 6,4 mm, das heißt weniger als ±3,2 mm jeweils ausgehend von einem Fern-Durchblickpunkt der zentralen optischen Korrektionszone, vorgesehen. Besonders bevorzugt beträgt die horizontale Erstreckung der zentralen optischen Korrektionszone ±10° oder weniger als ±10°. Für das Brillenglas mit 12 mm Hornhautscheitelabstand ist besonders bevorzugt entsprechend eine horizontale Erstreckung der zentralen optischen Korrektionszone von 4,2 mm oder von weniger als 4,2 mm, das heißt ±2,1 mm oder weniger als ±2,1 mm jeweils ausgehend von einem Fern-Durchblickpunkt der zentralen optischen Korrektionszone, vorgesehen. Die vertikale Erstreckung der zentralen optischen Korrektionszone beträgt vorzugsweise weniger als ±15°, besonders bevorzugt ±10° oder weniger als ±10°, jeweils ausgehend von einem Fern-Durchblickpunkt. Für das Brillenglas mit 12 mm Hornhautscheitelabstand sind entsprechend vorzugsweise weniger als 6,4 mm, das heißt weniger als ±3,2 mm jeweils ausgehend vom Fern-Durchblickpunkt, besonders bevorzugt 4,2 mm oder weniger als 4,2 mm, das heißt ±2,1 mm oder weniger als ±2,1 mm jeweils ausgehend vom Fern-Durchblickpunkt, als vertikale Erstreckung der zentralen optischen Korrektionszone vorgesehen. Die in Millimeter angegebene im optischen Korrektionsmittel vorgesehene jeweilige Erstreckung hängt dabei vom Abstand des optischen Korrektionsmittels vom Auge ab. Daher sind bei erfindungsgemäßen Kontaktlinsen geringere Werte für die Erstreckung der zentralen optischen Korrektionszone vorgesehen.

Vorzugsweise ist die vertikale Erstreckung geringer als die horizontale Erstreckung.

Die zentrale optische Korrektionszone und die periphere Funktionszone sind disjunkt, das heißt sie überlappen sich nicht. Die periphere Funktionszone kann die zentrale optische Korrektionszone unmittelbar umgeben. Um Bildsprünge und unstete Brillenglasoberflächen oder unstete Linsenoberflächen zu vermeiden, ist vorzugsweise eine Übergangszone zwischen der zentralen optischen Korrektionszone und der peripheren Funktionszone vorgesehen. Mit Hilfe der Übergangszone ist vorzugsweise ein stetiger und glatter Übergang zwischen der zentralen optischen Korrektionszone und der peripheren Funktionszone bereitgestellt. Die Eigenschaften der zentralen optischen Korrektionszone und der peripheren Funktionszone sind stetig und glatt ineinander übergeführt. Dadurch sind störende Kanten im Seheindruck der Person vermieden.

Die periphere Funktionszone kann die zentrale optische Korrektionszone nur teilweise umgeben, beispielsweise über einen Umfangswinkel von 270° oder 300° hinweg. Vorzugsweise umgibt die periphere Funktionszone die zentrale optische Korrektionszone vollständig. Weiter vorzugsweise umgibt die periphere Funktionszone die zentrale optische Korrektionszone im Wesentlichen elliptisch oder im Wesentlichen zirkulär, bevorzugt elliptisch oder zirkulär. Vorzugsweise sind die zentrale optische Korrektionszone und die periphere Funktionszone konzentrisch oder im Wesentlichen konzentrisch angeordnet. Damit ist gemeint, dass unabhängig von der genauen Beschaffenheit der jeweiligen äußeren Form ein Flächenschwerpunkt der zentralen optischen Korrektionszone und ein Flächenschwerpunkt der peripheren Funktionszone zusammentreffen oder im Wesentlichen zusammentreffen. Insbesondere verläuft vorzugsweise ein äußerer Rand der zentralen optischen Korrektionszone nicht tangential zu einem äußeren Rand der peripheren Funktionszone.

Der zweite Brechwert kann spezifisch für das Auge der Person angepasst sein, so dass eine am Auge der Person vorhandene periphere relative Weitsichtigkeit bei einer Anwendung des optischen Korrektionsmittels (insbesondere des Brillenglases und/oder der Kontaktlinse) auf das Auge der Person reduzierbar oder korrigierbar ist. Vorzugsweise ist der zweite Brechwert spezifisch für das Auge der Person angepasst, so dass bei einer Anwendung des optischen Korrektionsmittels (insbesondere des Brillenglases und/oder der Kontaktlinse) auf das Auge der Person für die periphere Refraktion eine relative induzierte Kurzsichtigkeit resultiert. Insbesondere ist dabei absolut gesehen eine kurzsichtige oder myope Defokussierung induzierbar, vorzugsweise zwischen 0 und +2 dpt, beispielsweise +1 dpt. Vorzugsweise kann die Person also durch die periphere Funktionszone hindurch nur unscharf sehen. Selbst bei einem Durchblicken der peripheren Funktionszone mit der Fovea (und/oder dem die Fovea umgebenden zentralen Bereich der Netzhaut) resultiert ein unscharfer Seheindruck. Insbesondere ist die periphere Funktionszone nicht dazu geeignet, durch sie hindurch zu lesen. Erfindungsgemäß ist der zweite Brechwert so angepasst, dass selbst ein foveales Durchblicken der peripheren Funktionszone kein Lesen zulässt. Foveales Durchblicken beschreibt hierbei den Vorgang, bei dem der Brillenträger durch periphere Bereiche des Brillenglases blickt. Insbesondere handelt es sich beim erfindungsgemäßen optischen Korrektionsmittel (insbesondere Brillenglas und/oder Kontaktlinse) um keine Gleitsicht-Brillenglas, gemäß DIN EN ISO 13666:2013-10, Absatz 8.3.5, welches mindestens eine Gleitsichtfläche umfasst und eine zunehmende (positive) Wirkung aufweist, wenn der Brillenträger nach unten blickt, somit also eine Fernzone zur verbesserten Sicht in die Ferne und eine Nahzone zur verbesserten Sicht in der Nähe, insbesondere zum Lesen, bereitstellt und damit einer fehlsichtigen Person ohne einen Brillenwechsel sowohl eine gute Fernsicht als auch eine gute Nahsicht ermöglicht.

Es hat sich gezeigt, dass sich durch das Reduzieren einer vorhandenen relativen peripheren Weitsichtigkeit bzw. insbesondere durch das Induzieren einer relativen peripheren Kurzsichtigkeit mittels eines optischen Korrektionsmittels (insbesondere eines Brillenglases und/oder einer Kontaktlinse) die Entstehung bzw. die Progression einer zentralen Kurzsichtigkeit hemmbar sind. Außerdem hat sich gezeigt, dass dadurch eine bestehende zentrale Kurzsichtigkeit reduzierbar ist. Durch das spezifische Anpassen des zweiten Brechwerts an das Auge der Person ist diese hemmende bzw. reduzierende Wirkung auf eine zentrale oder foveale Kurzsichtigkeit weiter verstärkbar. Unter einer zentralen oder fovealen Kurzsichtigkeit ist eine vorhandene myope Fehlsichtigkeit des Auges zu verstehen.

Im Sinne der vorliegenden Anmeldung zielt die periphere Funktionszone nicht primär auf eine Korrektion einer Fehlsichtigkeit ab. Die periphere Funktionszone kann zwar (als Nebeneffekt) einen korrigierten Seheindruck bereitstellen. Vorzugsweise stellt die periphere Funktionszone jedoch keinen korrigierten Seheindruck bereit. Stattdessen übt die periphere Funktionszone einen Einfluss auf die weitere Entwicklung des Auges aus. Durch Vorsehen der peripheren Funktionszone ist das Entstehen oder die Progression einer Kurzsichtigkeit am Auge der Person verhinderbar oder hemmbar. Durch Vorsehen der peripheren Funktionszone ist eine bestehende Kurzsichtigkeit am Auge der Person sogar verringerbar. Im Rahmen der vorliegenden Anmeldung sind insbesondere Kinder und junge Erwachsene, vorzugsweise Erwachsene unter 43 Jahren, unter dem Begriff "Person" zu verstehen.

Vorzugsweise ist als Größe der zentralen optischen Korrektionszone eine spezifisch für das Auge der Person bestimmte minimale Größe vorgesehen. Vorzugsweise ist die minimale Größe mittels eines psychophysischen Verfahrens bestimmt.

Nähere Details zum individuellen Bestimmen der minimalen Größe der zentralen optischen Korrektionszone, insbesondere zum psychophysischen Verfahren, sind bereits weiter oben in dieser Anmeldung erläutert.

Der zweite Brechwert kann über die gesamte periphere Funktionszone hinweg konstant sein. In diesem Fall ist die Verteilung des zweiten Brechwerts in der peripheren Funktionszone konstant.

Vorzugsweise ist der zweite Brechwert für verschiedene Exzentrizitäten in der peripheren Funktionszone jeweils spezifisch für ein Auge einer Person angepasst.

Im Sinne der vorliegenden Anmeldung werden unter "verschiedene Exzentrizitäten" verschiedene Abstände von der Fovea in radialer Richtung verstanden. Der zweite Brechwert kann also für verschiedene Abstände von der Fovea in radialer Richtung verschiedene Werte annehmen. In diesem Fall ist die Verteilung des zweiten Brechwerts in der peripheren Funktionszone radialsymmetrisch.

Vorzugsweise ist der zweite Brechwert für verschiedene Positionen in der peripheren Funktionszone jeweils spezifisch für ein Auge einer Person angepasst.

Der zweite Brechwert kann also für verschiedene Positionen in der peripheren Funktionszone verschiedene Werte annehmen. In diesem Fall ist die Verteilung des zweiten Brechwerts in der peripheren Funktionszone positionsabhängig.

Vorzugsweise beträgt die Differenz aus dem zweiten Brechwert und dem ersten Brechwert zumindest 0,1 dpt, vorzugsweise zwischen 0,1 dpt und 4 dpt, bevorzugt zwischen 0,5 dpt und 2,0 dpt, besonders bevorzugt zwischen 0,8 dpt und 1,2 dpt.

Vorzugsweise ist ein spezifisch für das Auge der Person maximal tolerierbarer zweiter Brechwert mit einem subjektiven und/oder einem objektiven Verfahren bestimmt.

Nähere Details zum Verfahren zur Bestimmung der individuell tolerierten Unschärfe in der Peripherie eines optischen Korrektionsmittels, insbesondere eines Brillenglases und/oder einer Kontaktlinse sind weiter oben in dieser Anmeldung erläutert.

Die "maximal tolerierbare Unschärfe" kann gemäß Atchison, David A. and Guo, Huanqing and Charman, W. Neil and Fisher, S. W. (2009): Blur limits for defocus, astigmatism and trefoil, Vision Research, 49(14), Seiten 2393-2403 definiert werden. Der Schwellwert für den zweiten Brechwert kann beispielsweise zwischen 0,3 und 2,5 dpt, vorzugsweise zwischen 0,5 und 1,5 dpt, insbesondere zwischen 0,8 und 1,2 dpt liegen.

Vorzugsweise ist ein möglichst hoher zweiter Brechwert, insbesondere der maximal tolerierbare zweite Brechwert in der peripheren Funktionszone des optischen Korrektionsmittels, insbesondere des Brillenglases und/oder der Kontaktlinse, vorgesehen. Dadurch ist eine Entstehung bzw. Progression einer zentralen Kurzsichtigkeit besonders gut hemmbar. Außerdem ist dadurch eine bestehende zentrale Kurzsichtigkeit besonders gut reduzierbar. Vorzugsweise ist der zweite Brechwert dabei in Abhängigkeit von der Exzentrizität oder positionsabhängig in der peripheren Funktionszone vorgesehen. Zusätzlich oder alternativ dazu kann der zweite Brechwert in Abhängigkeit von der individuellen peripheren Refraktion bestimmt und im optischen Korrektionsmittel, insbesondere im Brillenglas und/oder in der Kontaktlinse, vorgesehen sein.

Vorzugsweise wird spezifisch für das Auge der Person eine periphere Refraktion gemessen.

Nähere Details zum Verfahren zur Bestimmung der individuellen Brechkraftverteilung in der peripheren Funktionszone eines optischen Korrektionsmittels, insbesondere eines Brillenglases und/oder einer Kontaktlinse, sind weiter oben in dieser Anmeldung erläutert.

Vorzugsweise ist der zweite Brechwert in der peripheren Funktionszone des optischen Korrektionsmittels, insbesondere des Brillenglases und/oder der Kontaktlinse, unter Berücksichtigung der spezifisch für das Auge der Person bestimmten peripheren Refraktion vorgesehen. Dadurch ist eine Entstehung bzw. Progression einer zentralen Kurzsichtigkeit besonders gut hemmbar. Außerdem ist dadurch eine bestehende zentrale Kurzsichtigkeit besonders gut reduzierbar. Wie oben bereits erläutert kann zusätzlich oder alternativ dazu der zweite Brechwert in Abhängigkeit von einem maximal tolerierbaren zweiten Brechwert im optischen Korrektionsmittel, insbesondere im Brillenglas und/oder in der Kontaktlinse, vorgesehen sein.

Vorzugsweise ist die periphere Refraktion des Auges der Person in horizontaler Richtung in einem Bereich zumindest von -10° bis +10°, vorzugsweise in einem Bereich zumindest von -20° bis +20°, besonders bevorzugt in einem Bereich von -60° bis +60°, jeweils bezogen auf die Fovea, bestimmt.

Die angegebenen Winkel beziehen sich auf das Gesichtsfeld des Auges der Person. Der Nullpunkt ist dabei durch die Fovea definiert. Zur Messung der peripheren Refraktion des Auges der Person werden vorzugsweise mehrere jeweils zueinander in vertikaler Richtung versetzte horizontal verlaufende Linienmessungen durchgeführt. Der Versatz in vertikaler Richtung zwischen zwei benachbarten horizontal verlaufenden Linienmessungen beträgt vorzugsweise jeweils ±10°, besonders bevorzugt jeweils ±5°, jeweils ausgehend von der Fovea als Nullpunkt. Vorzugsweise beträgt der maximale Versatz in vertikaler Richtung zumindest ±10°, besonders bevorzugt zumindest ±20°, insbesondere ±60°, jeweils ausgehend von der Fovea als Nullpunkt.

Vorzugsweise wird die periphere Refraktion des Auges der Person mit einer Auflösung von ±5° oder besser, vorzugsweise ±2°, besonders bevorzugt ±1°, in horizontaler Richtung gemessen.

Vorzugsweise ist der zweite Brechwert in der peripheren Funktionszone derart vorgesehen, dass aus dem zweiten Brechwert und der peripheren Refraktion des Auges der Person ein Gesamtbrechwert resultiert.

Wie oben erläutert ist die periphere Refraktion des Auges der Person, das heißt die Brechkraft des Auges der Person in einem peripheren Bereich, vorzugsweise positionsabhängig bekannt. Insbesondere nimmt die Brechkraft des Auges der Person positionsabhängig unterschiedliche Werte an. Folglich sind auch positionsabhängig unterschiedliche zweite Brechwerte in der peripheren Funktionszone vorzusehen.

Der vorgegebene Gesamtbrechwert ist vorzugsweise auch bei jeweils positionsabhängigem zweiten Brechwert und positionsabhängiger Brechkraft des Auges der Person konstant. Der vorgegebene Gesamtbrechwert kann negativ sein. Vorzugsweise beträgt der vorgegebene Gesamtbrechwert 0 dpt, besonders bevorzugt ist ein positiver Gesamtbrechwert, beispielsweise 0,5 dpt oder 1 dpt. Dadurch ist eine Entstehung bzw. Progression einer zentralen Kurzsichtigkeit besonders gut hemmbar. Außerdem ist dadurch eine bestehende zentrale Kurzsichtigkeit besonders gut reduzierbar.

Weiterhin kann für die Bestimmung des zweiten Brechwerts bzw. der Verteilung des zweiten Brechwerts die Verteilung dioptrischer Abstände im Gesichtsfeld der Person berücksichtigt sein.

Vorzugsweise wird der aus der peripheren Refraktion des Auges der Person und dem vorgegebenen Gesamtbrechwert bestimmte zweite Brechwert mit dem spezifisch für das Auge der Person maximal tolerierbaren zweiten Brechwert verglichen, und bei einem Überschreiten des maximal tolerierbaren zweiten Brechwerts auf den maximal tolerierbaren zweiten Brechwert gesenkt.

Vorzugsweise erfolgt das Vergleichen positionsabhängig, insbesondere jeweils separat für verschiedene Messpunkte. Entsprechend erfolgt das Absenken bei einem Überschreiten des maximal tolerierbaren zweiten Brechwerts vorzugsweise positionsabhängig, insbesondere jeweils separat für verschiedene Messpunkte. Vorzugsweise ist also der aus der peripheren Refraktion des Auges der Person und dem vorgegebenen Gesamtbrechwert bestimmte zweite Brechwert oder, sofern dieser den maximal tolerierbaren zweiten Brechwert überschreitet, der maximal tolerierbare zweite Brechwert in der peripheren Funktionszone des optischen Korrektionsmittels, insbesondere des Brillenglases und/oder der Kontaktlinse, vorgesehen. Vorzugsweise erfolgt dieses Vorsehen positionsabhängig. Dadurch ist eine Entstehung bzw. Progression einer zentralen Kurzsichtigkeit besonders gut hemmbar. Außerdem ist dadurch eine bestehende zentrale Kurzsichtigkeit besonders gut reduzierbar.

Erfindungsgemäß ist weiterhin eine Vorrichtung zum Herstellen von spezifisch für ein Auge einer Person angepassten optischen Korrektionsmitteln vorgesehen. Die optischen Korrektionsmittel sind dabei vorzugsweise Brillengläser oder Kontaktlinsen. Die erfindungsgemäße Vorrichtung umfasst
- einen Automaten zur mechanischen Bearbeitung von optischen Oberflächen,
- eine Einrichtung zum Bestimmen von Oberflächenbearbeitungsdaten für die zentrale optische Korrektionszone und die periphere Funktionszone des optischen Korrektionsmittels, insbesondere des Brillenglases und/oder der Kontaktlinse, und
- eine Auswerteeinrichtung zum für das Auge der Person spezifischen Bereitstellen der Größe der zentralen optischen Korrektionszone, des in der zentralen optischen Korrektionszone vorzusehenden ersten Brechwerts, des in der peripheren Funktionszone vorzusehenden zweiten Brechwerts und/oder der in der peripheren Funktionszone vorzusehenden positionsabhängigen Verteilung des zweiten Brechwerts.

Bei dem Automaten zur mechanischen Bearbeitung von optischen Oberflächen handelt es sich um eine herkömmliche Vorrichtung zur mechanischen Bearbeitung von optischen Oberflächen (insbesondere von Brillengläsern und/oder Kontaktlinsen). Die mechanische Bearbeitung der optischen Oberflächen erfolgt dabei auf eine dem Fachmann bekannte Weise.

Die Auswerteeinrichtung kann dabei die Einrichtung zum Bestimmen von Oberflächenbearbeitungsdaten umfassen. Die Auswerteeinrichtung und die Einrichtung zum Bestimmen von Oberflächenbearbeitungsdaten können alternativ dazu getrennt ausgebildet sein. Es kann eine Schnittstelle zum Übermitteln der Größe der zentralen optischen Korrektionszone, des in der zentralen optischen Korrektionszone vorzusehenden ersten Brechwerts, des in der peripheren Funktionszone vorzusehenden zweiten Brechwerts und/oder der in der peripheren Funktionszone vorzusehenden positionsabhängigen Verteilung des zweiten Brechwerts zwischen der Auswerteeinrichtung und der Einrichtung zum Bestimmen von Oberflächenbearbeitungsdaten vorgesehen sein.

Die Auswerteeinrichtung kann außerdem Schnittstellen zum Einlesen von für das Auge der Person spezifischen Daten umfassen.

Vorzugsweise umfasst die erfindungsgemäße Vorrichtung weiterhin eine Testeinrichtung zur Überprüfung der bearbeiteten angepassten optischen Korrektionsmittel.

Die Erfindung wird nun anhand von Ausführungsbeispielen näher erläutert. Es zeigen
- Fig. 1: eine für ein Auge einer Person gemessene Blickwinkelverteilung mit Definition der zentralen optischen Korrektionszone und der peripheren Funktionszone,
- Fig. 2A: eine für ein an ein Auge einer Person angepasstes Brillenglas gemessene Verteilung des ersten und zweiten Brechwerts,
- Fig. 2B: die Verteilung aus Fig. 2A nach Glättung,
- Fig. 3: einen schematischen Aufbau eines Verfahrens zur Unterscheidung zwischen dem visuellen Blick- und Gesichtsfeld,
- Fig. 4: einen schematischen Aufbau eines Verfahrens zum Bestimmen einer maximal tolerierbaren Unschärfe.

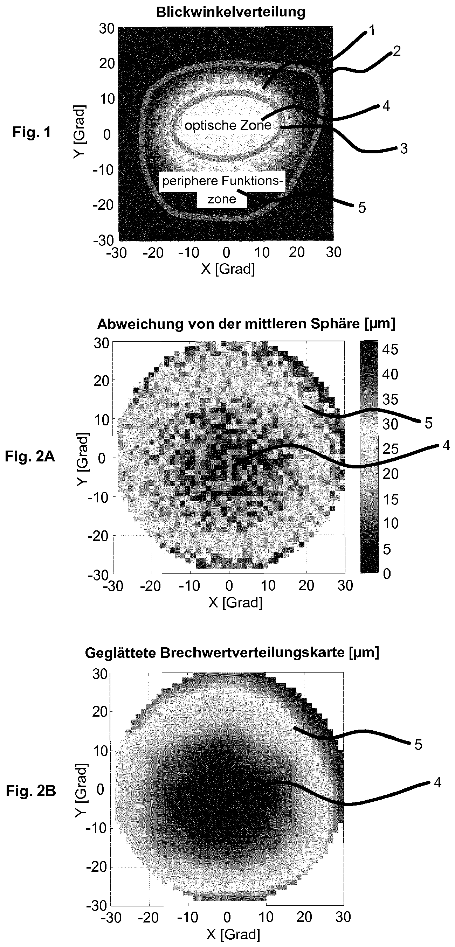

Fig. 1 zeigt eine für ein Auge einer Person gemessene Blickwinkelverteilung 1. Durch das Auge realisierte Blickwinkel sind dabei hell dargestellt. Die Blickwinkelverteilung 1 gibt eine Aussage über das Blickfeld des Auges der Person, das heißt inwieweit sich das Auge bezüglich einem schematisch angedeuteten Brillenglas 2 bewegt. Die Fig. 1 stellt die Blickwinkelverteilung 1 bzw. das Blickfeld des Auges der Person dabei in einem Bereich von -30° bis +30° in horizontaler Richtung (X) und in einem Bereich von -30° bis +30° in vertikaler Richtung (Y) dar. Es ist zu erkennen, dass eine Ausdehnung des Blickfelds in horizontaler Richtung (X) größer ist als in vertikaler Richtung (Y).

Eine schematisch dargestellte Übergangszone 3 unterteilt das Brillenglas 2 in eine zentrale optische Korrektionszone 4 und eine periphere Funktionszone 5. Die periphere Funktionszone 5 umgibt die zentrale optische Korrektionszone 4 vollständig. Die periphere Funktionszone 5 reicht bis zu einem Rand des Brillenglases 2. Man erkennt, dass sich die durch das Auge realisierten Blickwinkel im Wesentlichen auf die optische Korrektionszone 4 beschränken.

In einem erfindungsgemäß herstellten Brillenglas 2 ist die zentrale optische Korrektionszone 4 mit einem negativen ersten Brechwert versehen. Die periphere Funktionszone 5 ist mit einem zweiten Brechwert oder mit einer positionsabhängigen Verteilung des zweiten Brechwerts versehen. Der zweite Brechwert ist relativ zum ersten Brechwert positiver. Das heißt, dass die Differenz aus dem zweiten Brechwert und dem ersten Brechwert, also "zweiter Brechwert minus erster Brechwert", positiv ist. Vorzugsweise nimmt der zweite Brechwert über die periphere Funktionszone hinweg verschiedene Werte an. In diesem Fall ist vorzugsweise jeder dieser Werte relativ zum ersten Brechwert positiver.

Insbesondere sind die Größe der zentralen optischen Korrektionszone 4 und der zweite Brechwert in der peripheren Funktionszone 5 spezifisch für das Auge der Person angepasst.

Es hat sich gezeigt, dass sich durch das Reduzieren einer vorhandenen relativen peripheren Weitsichtigkeit bzw. insbesondere durch das Induzieren einer relativen peripheren Kurzsichtigkeit beispielsweise mittels des Brillenglases 2 die Entstehung bzw. die Progression einer zentralen Kurzsichtigkeit gehemmt werden können. Außerdem hat sich gezeigt, dass dadurch eine bestehende zentrale Kurzsichtigkeit reduziert werden kann. Durch das spezifische Anpassen des zweiten Brechwerts an das Auge der Person kann diese hemmende bzw. reduzierende Wirkung auf eine zentrale Kurzsichtigkeit weiter verstärkt werden.

Fig. 2A zeigt eine für ein erfindungsgemäß an ein Auge einer Person angepasstes Brillenglas 2 gemessene Verteilung des ersten und zweiten Brechwerts. Es ist wiederum ein -30° bis +30° in horizontaler Richtung (X) und -30° bis +30° in vertikaler Richtung (Y) entsprechender Bereich dargestellt. Diese Brechwertverteilung ergibt sich unmittelbar aus einer Messung der Oberflächentopographie des Brillenglases 2, bei der die Abweichung von der mittleren Sphäre bestimmt wird. In der zentralen optischen Korrektionszone 4 ist der erste Brechwert negativ. Dem entsprechen im gezeigten Beispiel die Werte von 0 - 10 µm Abweichung von der mittleren Sphäre, die zu der dunklen zentralen Einfärbung in Fig. 2A führen. Der Brechwert nimmt nach außen hin immer weiter zu. Die genaue Lage der Übergangszone 3 ist in Fig. 2A nicht eingezeichnet. In der peripheren Funktionszone 5 ist der zweite Brechwert im gezeigten Beispiel positiv. Die Werte von 35 - 45 µm Abweichung von der mittleren Sphäre, die zu der dunklen peripheren Einfärbung in Fig. 2A führen, entsprechen im gezeigten Beispiel besonders hohen zweiten Brechwerten. Fig. 2B zeigt die Brechwertverteilung aus Fig. 2A nach Faltung mit einem Glättungskern bei Nullblickrichtung. Eine Breite und eine Höhe des Glättungskerns werden dabei aus einer zugrundeliegenden Blickwinkelverteilung (siehe Fig. 1) geschätzt.

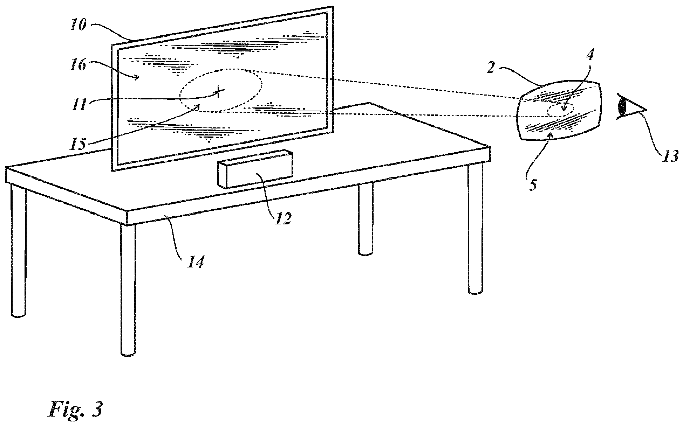

Fig. 3 zeigt einen schematischen Aufbau eines Verfahrens zur Unterscheidung zwischen dem visuellen Blick- und Gesichtsfeld.

Mit dem gezeigten Aufbau wird ein psychophysisches Verfahren durchgeführt, das beispielsweise als adaptives Stufenverfahren ausgestaltet ist. Dabei wird erfasst, inwieweit (d.h. bis zu welcher Sehexzentrizität) eine Sehaufgabe durch Bewegen der Augen und/oder durch Bewegen des Kopfes bewältigt wird. Die optische Korrektionszone 4 ist vorzugsweise so groß zu bemessen, dass sie den durch die Augenbewegung erschlossenen Bereich umfasst bzw. insbesondere genau dem durch die Augenbewegung erschlossenen Bereich entspricht.

Zur Durchführung des psychophysischen Verfahrens ist eine Anzeigevorrichtung 10 erforderlich. Im gezeigten Beispiel wird ein feststehender Bildschirm bzw. Monitor verwendet.

Auf der Anzeigevorrichtung 10 wird ein Sehziel 11 in einem Nullpunkt, beispielsweise dem Mittelpunkt der Anzeigevorrichtung 10, präsentiert. Das Sehziel 11 ist exemplarisch als ein schwarzes "+"-Symbol dargestellt, kann jedoch verschiedene Farben und Formen annehmen. Es kann weiterhin statistisch oder dynamisch sein. Zu gegebenen Zeitpunkten springt das Sehziel 11 aus dem Nullpunkt heraus an einen bestimmten Punkt auf der Anzeigevorrichtung 10. Dies ist in der Fig. 3 nicht dargestellt. Dabei wird von einem Tracker 12, das heißt einem Gerät zur gleichzeitigen Messung der Augen- und Kopfbewegungen, erfasst, ob eine Person mit ihrem Auge 13 dem Sehziel 11 durch eine Augen- und/oder eine Kopfbewegung folgt. Der Tracker 12 kann im gezeigten Beispiel ein selbständiges externes Gerät sein oder in die Anzeigevorrichtung 10 integriert sein. Beispielsweise können die Anzeigevorrichtung 10 und der Tracker 12 auf einem Tisch 14 platziert sein.

Dieser Vorgang (Herausspringen des Sehziels 11 aus dem Nullpunkt heraus an einen bestimmten Punkt auf der Anzeigevorrichtung 10) wird für unterschiedliche Punkte auf der Anzeigevorrichtung 10 wiederholt. Vorzugsweise wird dabei solange die Exzentrizität des Sehziels 11 erhöht, bis die Person dem Sehziel 11 nicht mehr ausschließlich mit Augenbewegungen folgt, sondern Kopfbewegungen einsetzt. Vorzugsweise wird das Verfahren solange durchgeführt, bis der Anzeigebereich der Anzeigevorrichtung 10 in einen zentralen Bereich 15 und einen peripheren Bereich 16 unterteilt werden kann. Der zentrale Bereich 15 wird dabei ausschließlich durch Augenbewegungen erschlossen. Der periphere Bereich 16 wird dagegen zusätzlich durch Kopfbewegungen erschlossen. Zur besseren Unterscheidung in Fig. 3 sind der zentrale Bereich 15 und der periphere Bereich 16 schematisch auf der Anzeigevorrichtung 10 eingezeichnet. Der zentrale Bereich 15 und der periphere Bereich 16 werden jedoch während der Durchführung des Verfahrens vorzugsweise nicht auf der Anzeigevorrichtung 10 angezeigt. Die Person kann zusätzlich ein optisches Korrektionsmittel, insbesondere ein Brillenglas 2 vor dem Auge 13 verwenden. Zum besseren Verständnis sind auf dem Brillenglas 2 korrespondierend zum zentralen Bereich 15 und peripheren Bereich 16 der Anzeigevorrichtung 10 eine zentrale optische Korrektionszone 4 und eine periphere Funktionszone 5 eingezeichnet. Ein für die Durchführung des Verfahrens zur Unterscheidung zwischen dem visuellen Blick- und Gesichtsfeld verwendetes Brillenglas weist jedoch vorzugsweise keine Unterteilung in eine zentrale optische Korrektionszone 4 und eine periphere Funktionszone 5 auf.

Ziel des Verfahrens nach Fig. 3 ist es, die zentrale optische Korrektionszone 4 spezifisch für das Auge 13 der Person so weit zu begrenzen, dass sie nur dem zentralen Bereich 15, das heißt nur dem Bereich, der ausschließlich durch Augenbewegungen erschlossen wird, entspricht. Durch dieses Minimieren der Größe der zentralen optischen Korrektionszone 4 kann die periphere Funktionszone 5 eine möglichst große Fläche auf dem Brillenglas 2 einnehmen. Dadurch kann die periphere Funktionszone 5 eine besonders gute Wirkung entfalten. Es hat sich gezeigt, dass dadurch die Entstehung bzw. Progression einer zentralen Kurzsichtigkeit besonders gut gehemmt werden können. Außerdem kann dadurch eine bestehende zentrale Kurzsichtigkeit besonders gut reduziert werden.

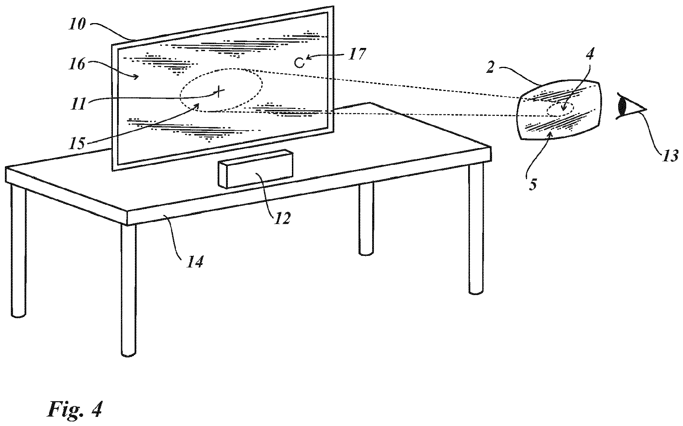

Fig. 4 zeigt einen schematischen Aufbau eines Verfahrens zum für ein Auge 13 einer Person spezifischen Bestimmen einer maximal tolerierbaren Unschärfe in der Netzhautperipherie.

Mit dem gezeigten Aufbau wird ein psychophysisches Verfahren durchgeführt, das beispielsweise als adaptives Stufenverfahren ausgestaltet ist. Dabei wird bestimmt, welche Unschärfe spezifisch für das Auge 13 der Person in der Netzhautperipherie maximal toleriert wird, das heißt welcher zweite Brechwert in der peripheren Funktionszone 5 eines Brillenglases 2 bei mittigem Durchblicken des Brillenglases 2 maximal toleriert wird.

Zur Durchführung des psychophysischen Verfahrens ist eine Anzeigevorrichtung 10 erforderlich. Im gezeigten Beispiel wird ein feststehender Bildschirm bzw. Monitor verwendet.

Auf der Anzeigevorrichtung 10 wird ein Sehziel 11 in einem Nullpunkt, beispielsweise dem Mittelpunkt der Anzeigevorrichtung 10, präsentiert. Das Sehziel 11 ist exemplarisch als ein schwarzes "+"-Symbol dargestellt, kann jedoch verschiedene Farben und Formen annehmen. Es kann weiterhin statistisch oder dynamisch sein.

Die Person blickt von einem bestimmten Abstand aus mit dem Auge 13 auf die Anzeigevorrichtung 10. Dabei verwendet die Person zusätzlich ein optisches Korrektionsmittel, insbesondere ein Brillenglas 2 vor dem Auge 13. In der Fig. 4 ist wiederum lediglich zum besseren Verständnis auf dem Brillenglas 2 korrespondierend zum zentralen Bereich 15 und peripheren Bereich 16 der Anzeigevorrichtung 10 eine zentrale optische Korrektionszone 4 und eine periphere Funktionszone 5 eingezeichnet. Ein für die Durchführung des Verfahrens zum für ein Auge 13 einer Person spezifischen Bestimmen einer maximal tolerierbaren peripheren Unschärfe verwendetes Brillenglas weist jedoch vorzugsweise keine Unterteilung in eine zentrale optische Korrektionszone 4 und eine periphere Funktionszone 5 auf. Das Brillenglas ist also vorzugsweise kein erfindungsgemäßes Brillenglas 2, sondern beispielsweise ein Einstärkenbrillenglas, das als Brechwert den zweiten Brechwert aufweist. Die Person wird instruiert, das Brillenglas mittig zu durchblicken und ihr Auge 13 auf das Sehziel 11 auszurichten.

Zusätzlich zum Sehziel 11 wird ein Sehzeichen 17 mit einer definierten Exzentrizität in einem peripheren Bereich 16 auf der Anzeigevorrichtung 10 angezeigt. Das Sehzeichen 17 ist gemäß der derzeit gültigen DIN EN ISO 8596 aufgebaut. Beispielsweise wird ein Landolt-C als Sehzeichen 17 verwendet. Das Sehzeichen 17 ist angesichts der mittigen Ausrichtung des Auges 13 durch das Brillenglas hindurch auf das zentrale Sehziel 11 für die Person durch die Peripherie des Brillenglases hindurch mit dem peripheren Bereich der Netzhaut wahrzunehmen. Die Peripherie des Brillenglases entspricht dabei der in Fig. 4 eingezeichneten peripheren Funktionszone 5.

Während des psychophysischen Verfahrens werden die Augen- und/oder Kopfbewegungen der Person erfasst. Dazu wird ein Tracker 12, das heißt ein Gerät zur gleichzeitigen Messung der Augen- und Kopfbewegungen, eingesetzt. Der Tracker 12 kann im gezeigten Beispiel ein selbständiges externes Gerät sein oder in die Anzeigevorrichtung 10 integriert sein. Beispielsweise können die Anzeigevorrichtung 10 und der Tracker 12 auf einem Tisch 14 platziert sein. Weiterhin kann das psychophysische Verfahren "gaze-contigent" durchgeführt werden. Zur Kontrolle der Augenbewegungen, bzw. um ein Gaze-Contigent-Experiment durchzuführen, wird ein Eye-Tracker verwendet, vorzugsweise ein möglichst schneller Eye-Tracker, wie z.B. ein Eye Link. Die Sampling-Rate beträgt dabei vorzugsweise zumindest 120 Hz, besonders bevorzugt zumindest 240Hz. Solche Sampling-Raten ermöglichen einen besonders stabilen Betrieb.

Nachfolgend wird beispielshaft eine Vorgehensweise für ein adaptives Stufenverfahren erläutert, bei dem die Größe des auf der Anzeigevorrichtung 10 angezeigten Sehzeichens 17 konstant bleibt und die Person nach und nach unterschiedliche optische Korrektionsmittel, beispielsweise Brillengläser, insbesondere Einstärkenbrillengläser, mit jeweils unterschiedlichen Brechwerten verwendet. Da beim hier erläuterten Verfahren zum Bestimmen der individuell tolerierten Unschärfe auf den Brechwert in der Peripherie (siehe periphere Funktionszone 5 in Fig. 4) der Brillengläser abgestellt wird, wird im Folgenden trotz der Verwendung von insbesondere Einstärkenbrillengläsern von zweiten Brechwerten gesprochen. Beim Vorgehen über ein adaptives Stufenverfahren wird der zweite Brechwert vorzugsweise so weit erhöht, bis sich ein unscharfer Seheindruck für die Person einstellt. Solange diese Unschärfe für die Person noch tolerierbar ist, wird der zweite Brechwert vorzugsweise weiter erhöht. Ziel ist es dabei, einen Schwellwert für den zweiten Brechwert zu finden, der eine für die Person maximal tolerierbare Unschärfe in der Netzhautperipherie bewirkt. Die Person verwendet beispielsweise nach und nach Brillengläser mit den zweiten Brechwerten 0 dpt, +1 dpt, +2 dpt und +3 dpt. Für jedes Brillenglas hat die Person anzugeben, ob das Sehzeichen 17 durch die Peripherie des Brillenglases hindurch mit einer tolerierbaren Unschärfe wahrnehmbar ist oder ob die Unschärfe nicht mehr tolerierbar ist. Die Person gibt beispielsweise bis +2 dpt an, die Unschärfe sei tolerierbar, und bei +3 dpt, die Unschärfe sei nicht mehr tolerierbar. In diesem Beispiel ergibt sich die maximal tolerierbare Unschärfe bei einem zweiten Brechwert von +2 dpt. Im hier vorgestellten Beispiel geht der Schwellwert für die maximal tolerierbare Unschärfe aus der Defokussierung hervor, also direkt aus dem zweiten Brechwert des Brillenglases.

Die beschriebene Vorgehensweise wird mehrmals wiederholt, wobei das Sehzeichen 17 bei jeder weiteren Bestimmung eines maximal tolerierbaren zweiten Brechwerts an einer unterschiedlichen Position angezeigt wird. Dabei wird vorzugsweise für eine Vielzahl von Positionen im Gesichtsfeld, das heißt für eine Vielzahl von Messpunkten, jeweils ein maximal tolerierbarer zweiter Brechwert bestimmt. Das Bestimmen des spezifisch für das Auge 13 der Person maximal tolerierbaren zweiten Brechwerts erfolgt also vorzugsweise positionsaufgelöst.

Vorzugsweise wird ein möglichst hoher zweiter Brechwert, insbesondere der maximal tolerierbare zweite Brechwert in der peripheren Funktionszone 5 des erfindungsgemäßen optischen Korrektionsmittels, insbesondere des erfindungsgemäßen Brillenglases 2, vorgesehen. Dadurch kann eine Entstehung bzw. Progression einer zentralen Kurzsichtigkeit besonders gut gehemmt werden. Außerdem kann dadurch eine bestehende zentrale Kurzsichtigkeit besonders gut reduziert werden. Vorzugsweise wird der zweite Brechwert dabei in Abhängigkeit von der Exzentrizität oder positionsabhängig in der peripheren Funktionszone 5 vorgesehen. Zusätzlich oder alternativ dazu kann der zweite Brechwert in Abhängigkeit von der individuellen peripheren Refraktion bestimmt und im erfindungsgemäßen optischen Korrektionsmittel, insbesondere im erfindungsgemäßen Brillenglas 2, vorgesehen werden.

### Bezugszeichenliste

- 1: Blickwinkelverteilung
- 2: Brillenglas
- 3: Übergangszone
- 4: zentrale optische Korrektionszone
- 5: periphere Funktionszone

- 10: Anzeigevorrichtung
- 11: Sehziel
- 12: Tracker
- 13: Auge
- 14: Tisch
- 15: zentraler Bereich
- 16: peripherer Bereich
- 17: Sehzeichen

## Patentansprüche

1. Verfahren zum Herstellen eines optischen Korrektionsmittels, insbesondere eines Brillenglases (2) und/oder einer Kontaktlinse,
wobei das optische Korrektionsmittel eine zentrale optische Korrektionszone (4) und eine diese umgebende periphere Funktionszone (5) umfasst,
wobei die Größe der zentralen optischen Korrektionszone (4) spezifisch für ein Auge einer Person angepasst wird,
wobei die zentrale optische Korrektionszone (4) mit einem negativen ersten Brechwert versehen wird,
wobei die periphere Funktionszone (5) mit einem zweiten Brechwert oder mit einer positionsabhängigen Verteilung des zweiten Brechwerts versehen wird,
wobei der zweite Brechwert relativ zum ersten Brechwert positiver ist, und
wobei der zweite Brechwert spezifisch für das Auge der Person angepasst wird.

2. Verfahren nach Anspruch 1, wobei als Größe der zentralen optischen Korrektionszone (4) eine spezifisch für das Auge der Person, vorzugsweise mittels eines psychophysischen Verfahrens, bestimmte minimale Größe vorgesehen wird.

3. Verfahren nach Anspruch 1 oder 2, wobei der zweite Brechwert für verschiedene Exzentrizitäten in der peripheren Funktionszone (5) jeweils spezifisch für ein Auge einer Person angepasst ist.

4. Verfahren nach Anspruch 1 oder 2, wobei der zweite Brechwert für verschiedene Positionen in der peripheren Funktionszone (5) jeweils spezifisch für ein Auge einer Person angepasst ist.

5. Verfahren nach einem der vorhergehenden Ansprüche, wobei die Differenz aus dem zweiten Brechwert und dem ersten Brechwert zumindest 0,1 dpt, vorzugsweise zwischen 0,1 dpt und 4 dpt, bevorzugt zwischen 0,5 dpt und 2,0 dpt, besonders bevorzugt zwischen 0,8 dpt und 1,2 dpt beträgt.

6. Verfahren nach einem der vorhergehenden Ansprüche, wobei ein spezifisch für das Auge der Person maximal tolerierbarer zweiter Brechwert mit einem subjektiven und/oder einem objektiven Verfahren bestimmt wird.

7. Verfahren nach einem der vorhergehenden Ansprüche, wobei spezifisch für das Auge der Person eine periphere Refraktion gemessen wird.

8. Verfahren nach Anspruch 7, wobei die periphere Refraktion des Auges der Person in horizontaler Richtung in einem Bereich zumindest von -10° bis +10°, vorzugsweise in einem Bereich zumindest von -20° bis +20°, besonders bevorzugt in einem Bereich von -60° bis +60°, jeweils bezogen auf die Fovea gemessen wird.

9. Verfahren nach Anspruch 7 oder 8, wobei die periphere Refraktion des Auges der Person mit einer Auflösung von ±5°, vorzugsweise ±2°, besonders bevorzugt ±1°, in horizontaler Richtung gemessen wird.

10. Verfahren nach einem der Ansprüche 7 bis 9, wobei der zweite Brechwert in der peripheren Funktionszone (5) derart vorgesehen wird, dass aus dem zweiten Brechwert und der peripheren Refraktion des Auges der Person ein vorgegebener Gesamtbrechwert resultiert.

11. Verfahren nach Anspruch 10, wobei der aus der peripheren Refraktion des Auges der Person und dem vorgegebenen Gesamtbrechwert bestimmte zweite Brechwert mit dem spezifisch für das Auge der Person maximal tolerierbaren zweiten Brechwert verglichen wird, und bei einem Überschreiten des maximal tolerierbaren zweiten Brechwerts auf den maximal tolerierbaren zweiten Brechwert gesenkt wird.

12. Optisches Korrektionsmittel, insbesondere Brillenglas (2) und/oder Kontaktlinse, umfassend
eine zentrale optische Korrektionszone (4) und eine diese umgebende periphere Funktionszone (5),
wobei die Größe der zentralen optischen Korrektionszone (4) spezifisch für ein Auge einer Person angepasst ist,
wobei die zentrale optische Korrektionszone (4) mit einem negativen ersten Brechwert versehen ist,
wobei die periphere Funktionszone (5) mit einem zweiten Brechwert oder mit einer positionsabhängigen Verteilung des zweiten Brechwerts versehen ist,
wobei der zweite Brechwert relativ zum ersten Brechwert positiver ist, und
wobei der zweite Brechwert spezifisch für das Auge der Person angepasst ist.

13. Vorrichtung zum Herstellen von spezifisch für ein Auge einer Person angepassten optischen Korrektionsmitteln nach einem Verfahren nach einem der Ansprüche 1 bis 11, umfassend
einen Automaten zur mechanischen Bearbeitung von optischen Oberflächen,
eine Einrichtung zum Bestimmen von Oberflächenbearbeitungsdaten für die zentrale optische Korrektionszone (4) und die periphere Funktionszone (5) des optischen Korrektionsmittels, insbesondere des Brillenglases (2) und/oder der Kontaktlinse, und
eine Auswerteeinrichtung zum für das Auge der Person spezifischen Bereitstellen der Größe der zentralen optischen Korrektionszone (4), des in der zentralen optischen Korrektionszone (4) vorzusehenden ersten Brechwerts, des in der peripheren Funktionszone (5) vorzusehenden zweiten Brechwerts und/oder der in der peripheren Funktionszone (5) vorzusehenden positionsabhängigen Verteilung des zweiten Brechwerts.

14. Vorrichtung nach Anspruch 13, weiterhin umfassend eine Testeinrichtung zur Überprüfung der bearbeiteten angepassten optischen Korrektionsmittel.
